# NOUVEAU FASCICULE DE BREVET EUROPEEN

(11) **EP 1 849 029 B2**
(45) Date de publication et mention de la décision concernant l'opposition: **15.12.2021**
(45) Mention de la délivrance du brevet: 20.06.2018
(21) Numéro de dépôt: 06709479.7
(22) Date de dépôt: 03.02.2006
(51) Int. Cl.: G02B 6/02, H01S 3/067, H01S 3/094, H01S 3/00, H01S 3/16, H01S 3/0941, H01S 3/106

(54) **LASER À CONFINEMENT D'ONDES DE POMPE COMPORTANT UNE FIBRE OPTIQUE COMPOSITE**
OPTISCHE VERBUNDFASER FÜR EINEN LASER- UND PUMP-WELLEN-CONFINEMENT-LASER UND VERWENDUNG DAFÜR IN LASERN
COMPOSITE OPTICAL FIBRE FOR A LASER- AND PUMP-WAVE CONFINEMENT LASER AND USE THEREOF IN LASERS

(30) Priorité: 04.02.2005 FR 0550344
(43) Date de publication de la demande: 31.10.2007
(73) Titulaire: Centre National de la Recherche Scientifique (C.N.R.S.), 75794 Paris Cedex 16 (FR); Université de Bordeaux, 33000 Bordeaux (FR)
(72) Inventeur: SALIN, François, F-33170 Gradignan (FR); LIMPERT, Jens, D-07745 Jena (DE)
(74) Mandataire: Jacobacci Coralis Harle
(86) Numéro de dépôt international: PCT/FR2006/050100
(87) Numéro de publication internationale: WO 2006/082348

(56) Documents cités:
- LIMPERT J ET AL: "Low-nonlinearity single-transverse-mode ytterbium-doped photonic crystal fiber amplifier" OPTICS EXPRESS OPT. SOC. AMERICA USA, vol. 12, no. 7, 5 avril 2004 (2004-04-05), XP002346902 ISSN: 1094-4087 AN-number: 8084672
- LIEM A ET AL: "Air-clad large-mode-area photonic crystal fibers: power scaling concepts up to the multi-kW range" PROCEEDINGS OF THE SPIE - THE INTERNATIONAL SOCIETY FOR OPTICAL ENGINEERING SPIE-INT. SOC. OPT. ENG USA, vol. 5335, no. 1, 2004, pages 158-169, XP002346903 ISSN: 0277-786X AN-number 8351156
- SCHREIBER T ET AL: "High-power air-clad large-mode-area photonic crystal fiber laser" LASERS AND ELECTRO-OPTICS EUROPE, 2003. CLEO/EUROPE. 2003 CONFERENCE ON MUNICH, GERMANY 22-27 JUNE 2003, PISCATAWAY, NJ, USA,IEEE, 22 juin 2003 (2003-06-22), pages 656-656, XP010711877 ISBN: 0-7803-7734-6 cité dans la demande
- LIMPERT J ET AL: "High-performance ultrafast fiber laser systems" PROCEEDINGS OF THE SPIE - THE INTERNATIONAL SOCIETY FOR OPTICAL ENGINEERING SPIE-INT. SOC. OPT. ENG USA, vol. 5335, no. 1, 2004, pages 245-252, XP002346904 ISSN: 0277-786X AN-number: 8351159
- SCHREIBER T ET AL: "High power photonic crystal fiber laser systems" TRANSPARENT OPTICAL NETWORKS, 2004. PROCEEDINGS OF 2004 6TH INTERNATIONAL CONFERENCE ON WARSAW, POLAND JULY 4-8, 2004, PISCATAWAY, NJ, USA,IEEE, vol. 1, 4 juillet 2004 (2004-07-04), pages 131-135, XP010743461 ISBN: 0-7803-8343-5

## Description

La présente invention concerne un laser à confinement d'ondes de pompe et de laser comportant une fibre optique composite, elle permet la réalisation de lasers à puissance élevée et peut être appliquée à la réalisation de systèmes lasers de divers types. Le terme laser recouvre toute application dans laquelle la capacité de la fibre à émettre de la lumière par désexcitation électronique d'éléments ayant préalablement étés placés dans un état électronique excité, est mise en œuvre, cela concernant donc aussi bien les lasers que, plus généralement, les amplificateurs optiques. Le laser à fibre de l'invention bien qu'il puise être utilisé dans des lasers à émission continue, permet d'obtenir des résultats plus particulièrement intéressants dans les lasers impulsionnels.

Le principe de fonctionnement du laser est connu, il consiste, d'une manière générale, à transférer une énergie dite de pompe à un milieu matériel pour placer dans un état électronique excité des éléments de ce milieu, créant ainsi une inversion de population, éléments qui retourneront vers un état électronique de base en émettant un rayonnement électromagnétique d'une manière cohérente et à une longueur d'onde déterminée grâce à une structure amplificatrice favorisant ces caractéristiques d'émission.

Toutefois, la conversion d'énergie n'est pas parfaite dans un laser. D'une part, toute l'énergie de pompe n'est pas utilisée par le milieu pour l'inversion de population et on exprime le gain G de l'amplificateur comme étant proportionnel au rapport entre la fluence (densité d'énergie ou, dans le cas d'une émission continue, intensité) de pompe Jp et un paramètre du milieu appelé fluence de saturation Jsat : G=exp(Jp/Jsat) et lorsque le matériau présente une fluence de saturation élevée, il convient d'utiliser une fluence de pompe élevée. D'autre part, lors de l'émission, la longueur d'onde d'émission est différente, inférieure, de celle ayant servit au pompage et une partie de l'énergie d'excitation du milieu n'est pas convertie dans le rayonnement d'émission et produit de la chaleur dans le milieu. Ainsi, si le matériau est à fort Jsat, le gain étant alors faible, la densité de puissance de pompe doit être grande et la chaleur produite peut devenir telle qu'elle atteint le seuil de fracture du matériau. Enfin, les milieux matériels ne sont pas optiquement parfaits et peuvent présenter des effets d'absorption, diffraction ou autres qui sont parfois non linéaires en fonction des énergies en jeu et qui compromettent la qualité du rayonnement émis.

Ainsi, dans les lasers de puissance il est particulièrement difficile de combiner la puissance moyenne, l'énergie et la qualité spatiale. Les lasers actuels de forte puissance permettent soit de produire des puissances élevées et de fortes énergies par impulsion mais au dépend de la qualité spatiale du faisceau, cas des lasers à barreaux ou encore dits "massifs" (laser « slab » ou laser « thin disk »), ou des puissances élevées mais sans possibilité de rayonnement impulsionnel à faible largeur d'impulsion, cas des lasers à fibre.

Les lasers de forte puissance à barreaux ont un diamètre de l'ordre de quelques millimètres et longueur d'une dizaine de cm. Le diamètre de ce barreau étant très grand devant la longueur d'onde il est particulièrement difficile de maintenir une qualité de faisceau proche de la limite de diffraction. Les lasers produisant des puissances importantes, typiquement supérieure à 100W, sont donc multimodes et, bien que de forte puissance, ils ne permettent pas d'obtenir des intensités (densité surfacique de puissance) très élevées. De plus, la petite taille des lasers massifs pose des problèmes de dissipation thermique qui sont difficiles à résoudre d'une manière simple.

Dans le cas des lasers de puissance à fibre, du fait de la longueur très importante de ces fibres, ce sont les effets non linéaires qui prédominent. Parmi ces effets on peut citer les effets Raman, l'automodulation de phase, l'autofocalisation... Les effets non-linéaires sont proportionnels au produit de la puissance crête du signal et de la longueur de propagation, c'est-à-dire la longueur de la fibre, et sont donc principalement marqués dans le cas de lasers à impulsions brèves. Il en résulte qu'actuellement, les lasers à impulsions picosecondes ou femtosecondes sont limités à des énergies inférieures à typiquement une centaine de microjoules.

On a proposé d'augmenter l'efficacité des lasers à fibre en mettant en œuvre des moyens d'optique photonique comme dans l'article « High-power air-clad large mode area photonic crystal fiber laser » de J.Limpert et al. 7 AVR 2003, Vol.11, No7, OPTICS EXPRESS 818 avec une fibre composite de 2,3m de long dont le cœur actif triangulaire à un diamètre approximatif de 28µm et est entouré d'une région à répartition matricielle de trous d'air. L'article de LIEM A ET AL: "Air-clad large-mode-area photonic crystal fibers: power scaling concepts up to the multi-kW range", Proceedings of the SPIE, USA, vol. 5335, no. 1, 2004, pages 158-169, décrit une fibre à crystal photonique et dopée avec des terres rares.

L'article de Limpert et al.: "Low-nonlinearity single transverse-mode ytterbium-doped photonic crystal fiber amplifier", OPTICS EXPRESS, Optical Society of America, vol. 12, no. 7, 5 avril 2004, pages 1313-1319 , décrit un amplificateur optique basé sur une fibre optique à crystal photonique.

La présente invention propose un laser à fibre selon la revendication 1. En particulier c'est une fibre optique mais qui est d'une longueur réduite par rapport aux fibres lasers connues tout en ayant un milieu actif (zone où l'effet laser peut être produit) de section importante contrairement aux fibres laser connues, ce qui la rapproche des barreaux. Selon l'invention, la longueur de la fibre est inférieure à 50cm. De plus des moyens particuliers sont mis en œuvre dans la fibre optique comme une structure photonique de guidage des ondes de pompe et laser. La très grande section du cœur actif associée à une longueur très faible permet à la fibre de l'invention de servir d'amplificateur optique de puissance et, dans le cas d'impulsions laser, d'obtenir des puissances importantes sans atteindre le seuil d'apparition des effets non-linéaires indésirables.

L'invention concerne donc un laser à fibre comportant une fibre optique composite comportant un cœur entouré d'une gaine guide de pompe au contact et entourant le cœur, la gaine guide de pompe étant une structure photonique formée d'un ensemble sensiblement régulier matriciel de capillaires espacés disposés parallèlement au cœur dans un matériau de gaine guide de pompe, le cœur étant dans un matériau de cœur avec en outre des éléments dopants pouvant être mis dans au moins un état électronique excité par absorption de l'énergie d'un signal optique de pompe d'une première longueur d'onde déterminée traversant ledit cœur et pouvant la restituer par désexcitation sous forme d'un signal optique d'une seconde longueur d'onde déterminée, le cœur ayant un diamètre déterminé et la gaine guide de pompe ayant un diamètre déterminé.

Le diamètre de gaine guide de pompe est supérieur au diamètre de cœur et inférieur ou égal à quatre fois le diamètre de cœur, le diamètre du cœur étant supérieur ou égal à 35 micromètres. Selon l'invention, la longueur de la fibre est inférieure à 50 cm.

Dans divers modes de mise en œuvre de l'invention, les moyens suivants pouvant être utilisés seuls ou selon toutes les combinaisons techniquement envisageables, sont employés :
- le diamètre de cœur est d'environ 35 micromètres,
- le diamètre de la gaine guide de pompe est inférieur à 140 micromètres et, de préférence, est d'environ 130 micromètres,
- la gaine guide de pompe a une section hexagonale,
- la gaine guide de pompe a une section hexagonale, le diamètre de coin à coin étant d'environ 141 µm et plan à plan de 117µm,
- au moins une partie de la gaine guide de pompe qui est globalement sensiblement transparente pour le signal de pompe à la première longueur d'onde comporte au sein du matériau de gaine guide de pompe des éléments diminuant la transmission du signal optique de seconde longueur d'onde, (les éléments en question sont des éléments qui induisent par tout effet optique une diminution de la transmission du signal optique de seconde longueur d'onde dans la gaine de pompe et on considère donc que, par exemple, outre des éléments absorbants et/ou réfléchissants et/ou diffusants et/ou diffractant, une structure photonique ou un réseau produisant un tel résultat font partie de tels éléments)
- au moins une partie de la gaine guide de pompe qui est sensiblement transparente pour le signal de pompe à la première longueur d'onde comporte au sein du matériau de gaine guide de pompe des éléments absorbants et/ou réfléchissants et/ou diffusants et/ou diffractant le signal optique de seconde longueur d'onde,
- la partie de la gaine guide de pompe qui comporte des éléments absorbants et/ou réfléchissants et/ou diffusants et/ou diffractant le signal optique de seconde longueur d'onde est la partie au contact du cœur de la fibre,
- les éléments absorbants et/ou réfléchissants et/ou diffusants et/ou diffractant sont choisis parmi les microparticules ou nanoparticules métalliques, les terres rares ou les semi-conducteurs,
- la gaine optique comporte en outre une gaine de confinement autour de la gaine guide de pompe, ladite gaine de confinement étant d'indice optique inférieur à l'indice optique du matériau de la gaine guide de pompe,
- la gaine de confinement comporte essentiellement de l'air et est formée d'un assemblage contigu de capillaires (tubes à parois minces contenant de l'air) accolés,
- dans la gaine de confinement, les parois des capillaires accolés représentent un volume de matière au moins 10 fois inférieur au volume d'air,
- la fibre comporte en outre une gaine mécanique de rigidification disposée autour de la gaine de confinement,
- la gaine mécanique est dans un matériau choisi parmi les polymères organiques ou les matières minérales et, dans ce dernier cas, est de préférence en verre ou silice pure,
- la gaine mécanique a un diamètre d'au moins un millimètre,
- la gaine mécanique a un diamètre compris entre un millimètre et 10 millimètres,
- le matériau de cœur est identique au matériau de gaine guide de pompe (le cœur comporte en outre des dopants et la gaine guide de pompe éventuellement en plus des absorbants...).
- le matériau de cœur est identique au matériau de gaine guide de pompe et est de la silice pure (le cœur comporte en outre des dopants et la gaine guide de pompe éventuellement en plus des absorbants...),
- le matériau de cœur est identique au matériau de gaine guide de pompe et est du verre (le cœur comporte en outre des dopants et la gaine guide de pompe éventuellement en plus des absorbants...).

Le laser peut également comporter les moyens suivants pouvant être utilisés seuls ou selon toutes les combinaisons techniquement envisageables:
- les moyens propres permettant de former une cavité optiquement accordée comportant la fibre sont au moins un miroir plan d'extrémité de fibre et perpendiculaire au grand axe de ladite fibre,
- le miroir plan d'extrémité de fibre est réfléchissant pour au moins une partie du signal optique de seconde longueur d'onde déterminée,
- le miroir plan d'extrémité de fibre est réfléchissant pour au moins une partie du signal optique de pompe,
- le miroir plan d'extrémité de fibre est réfléchissant pour au moins une partie du signal optique de seconde longueur d'onde déterminée et pour au moins une partie du signal optique de pompe,
- le miroir plan est une face d'extrémité plane polie de la fibre et recouverte d'un composé réfléchissant,
- le miroir plan est un empilement de couches optiquement actives,
- les moyens propres permettant de former une cavité optiquement accordée comportant la fibre sont au moins une face plane polie d'extrémité de fibre et perpendiculaire au grand axe de ladite fibre,
- les moyens extérieurs permettant de former une cavité optiquement accordée comportant la fibre sont au moins un miroir plan extérieur,
- le miroir plan extérieur est réfléchissant pour au moins une partie du signal optique de seconde longueur d'onde déterminée,
- le miroir plan extérieur est réfléchissant pour au moins une partie du signal optique de pompe,
- le miroir plan extérieur est réfléchissant pour au moins une partie du signal optique de seconde longueur d'onde déterminée et pour au moins une partie du signal optique de pompe,
- les moyens extérieurs permettant de former une cavité optiquement accordée comportant la fibre sont au moins un réseau optique extérieur perpendiculaire et le long du grand axe de ladite fibre,
- le réseau optique extérieur est réglable afin de pouvoir accorder le laser,
- le signal optique de pompe est injecté dans la fibre axialement dans le cœur et la gaine guide de pompe,
- le signal optique de pompe est injecté dans la fibre radialement le long de ladite fibre,
- le signal optique de pompe est produit par au moins une diode électroluminescente,
- la diode électroluminescente de pompe est au moins une diode laser,
- le laser est constitué d'un assemblage d'au moins deux fibres composites, lesdites fibres étant utilisées dans un montage série et/ou parallèle,
- le laser est puisé et comporte une cellule de déclenchement,
- le laser est utilisé en amplificateur d'un signal optique comportant des impulsions optiques, la fibre étant traversée par le signal optique à amplifier et les impulsions déclenchant l'émission laser.

En ce qui concerne les modalités de réalisation du laser à fibre de l'invention une ou plusieurs des modalités suivantes sont considérées :
- la fibre est réalisée par assemblage avec mise en parallèle d'un fil (le cœur est formé d'un seul fil) ou un ensemble de fils (le cœur est formé d'un assemblage de fils) de matériau de cœur entouré de fils et capillaires de matériau de gaine guide de pompe selon la répartition matricielle, ledit assemblage étant chauffé afin de souder lesdits fils et capillaires ensembles et former une structure sensiblement homogène,
- la fibre est réalisée par assemblage avec mise en parallèle d'un fil ou un ensemble de fils de matériau de cœur entouré de fils et capillaires de matériau de gaine guide de pompe selon la répartition matricielle, un ensemble de capillaires accolés étant disposé autour pour former la gaine de confinement, ledit assemblage étant chauffé afin de souder lesdits fils et capillaires ensembles et former une structure sensiblement homogène,
- la fibre est réalisée par assemblage avec mise en parallèle d'un fil ou un ensemble de fils de matériau de cœur entouré de fils et capillaires de matériau de gaine guide de pompe selon la répartition matricielle, un ensemble de capillaires accolés étant disposé autour pour former la gaine de confinement, un matériau de gaine mécanique étant disposé extérieurement pour former la gaine mécanique, ledit assemblage étant chauffé afin de souder lesdits fils et capillaires ensembles et former une structure sensiblement homogène,
- la réalisation de la fibre se fait par étapes de chauffage, dans le cas d'un ensemble de fils de matériau de cœur, une première étape consistant à réaliser l'assemblage du cœur puis à le chauffer afin de souder lesdits fils former une structure de cœur sensiblement homogène,
- le ou les fils de matériaux de cœur ont initialement des éléments dopants,
- les éléments dopants sont incorporés dans le cœur après l'étape de réalisation du cœur par chauffage,
- la réalisation de la fibre se fait par étapes de chauffage, une fois le cœur réalisé (cas d'assemblage de fils) ou le fil de cœur disponible (le cœur est formé d'un seul fil), l'étape suivante consiste à réaliser la gaine guide de pompe qui est chauffée pour souder lesdits fils et capillaires ensembles et former une structure de guide de pompe sensiblement homogène autour du cœur,
- la réalisation de la fibre se fait par étapes de chauffage, une fois la gaine guide de pompe réalisée, l'étape suivante consiste à réaliser la gaine de confinement qui est chauffée pour souder lesdits capillaires ensembles et former une structure de gaine de confinement sensiblement homogène autour de la gaine guide de pompe,
- la réalisation de la fibre se fait par étapes de chauffage, une fois la gaine guide de pompe réalisée, l'étape suivante consiste à réaliser la gaine mécanique par déposition à chaud d'un matériau de gaine mécanique autour de la gaine de confinement,
- les fils sont portés à une température les rendant pâteux lors de l'assemblage.

L'invention permet de produire des rayonnements lumineux cohérents de très forte puissance moyenne tout en conservant une excellente qualité spatiale et la capacité de produire des impulsions de forte énergie. Par ailleurs elle permet d'augmenter très largement le domaine d'utilisation des amplificateurs optiques et lasers. On a donc possibilité d'obtenir en même temps des énergies et des puissances moyennes très élevées et une excellente qualité de faisceau avec un système relativement simple ne nécessitant pas forcement un refroidissement actif. Des applications en système tout fibre sont possibles ce qui permet de réaliser des appareils particulièrement robustes pour des applications de terrains ou autres.

L'application de la fibre aux lasers à impulsions brèves de forte puissance donne accès au domaine industriel (usinage, décapage, marquage...), au domaine médical (chirurgie oculaire, imagerie médicale...), au domaine des analyses de matériaux ou environnementales (LIDAR...), la recherche fondamentale...

La présente invention va maintenant être exemplifiée sans pour autant en être limitée avec la description qui suit en relation avec les figures suivantes:
la Figure 1 qui représente schématiquement une fibre composite simplifiée vue radialement et en transparence,
la Figure 2 qui représente schématiquement une fibre composite simplifiée vue axialement/transversalement et en transparence,
la Figure 3 qui représente un agrandissement de la fibre composite utilisée dans un laser à fibre selon l'invention selon une vue en section transversale de sa partie centrale,
la Figure 4 qui représente une application de la fibre composite à un amplificateur optique d'impulsions,
la Figure 5 qui représente un laser continu de l'invention avec la fibre composite,
la Figure 6 qui représente la courbe puissance de sortie en W par rapport à la puissance de pompe en W envoyée dans la fibre d'un laser de l'invention utilisant la fibre composite ainsi que la pente d'efficacité correspondante,
la Figure 7 qui représente le spectre de l'onde d'un laser de l'invention utilisant la fibre composite avec l'intensité en échelle logarithmique en unités arbitraires versus la longueur d'onde en nm,
la Figure 8 qui représente un laser pulsé de l'invention avec la fibre composite,
la Figure 9 qui représente une courbe durée d'impulsion en échelle logarithmique de ns versus l'énergie extraite par l'impulsion en µJ pour diverses fréquences de répétition du laser pulsé de la Figure 8,
la Figure 10 qui représente la courbe intensité d'impulsions en unités arbitraires versus le temps pour le laser pulsé de la Figure 8,
la Figure 11 qui représente le spectre de l'onde du laser pulsé de la Figure 8 avec l'intensité unités arbitraires versus la longueur d'onde en nm.

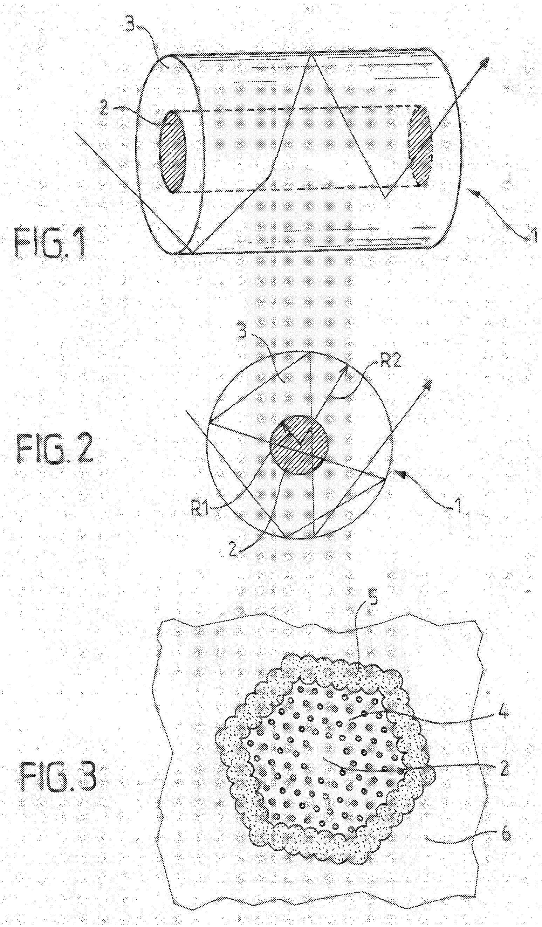

Comme représenté schématiquement sur les Figures 1 et 2, l'invention dans sa généralité consiste en un laser comprenant une fibre composite 1 qui comporte dans sa partie active un cœur 2 sensiblement cylindrique de rayon r1 composé d'un matériau présentant un gain optique à la longueur d'onde du signal laser et absorbant à la longueur d'onde de pompe. Ce cœur est entouré par une gaine optique 3 de rayon r2 composé d'un matériau transparent à la longueur d'onde de pompe. On a d'ailleurs représenté sur ces deux figures un exemple de trajet d'un photon d'onde de pompe qui traverse le cœur et se réfléchi en périphérie de la gaine optique pour être confiné à l'intérieur de la fibre composite 1. Les indices optiques entre la gaine optique 3 et l'extérieur de la gaine optique sont tels que ce confinement est réalisé (indice extérieur inférieur à l'indice de la gaine optique). De même, les indices optiques du cœur 2 et de la gaine optique 3 sont tels que l'onde de pompe peut effectivement traverser le cœur 2 et, de préférence, l'onde laser est confinée dans le cœur. Le rapport des diamètres r2/r1 est choisi de façon à être petit, typiquement inférieur à 10 et préférentiellement inférieur à 4. La longueur totale de la fibre composite dans ses principales applications est typiquement inférieure à 50 cm.

Le cœur 2 et la gaine optique 3 sont conçus de façon à ne permettre la propagation que du mode fondamental de l'onde laser dans le cœur de la fibre composite. Ceci peut être obtenu soit par un choix judicieux des indices de réfraction du cœur et de la gaine optique ou par une structure du type des cristaux photoniques comme préféré. Cette condition doit être remplie pour des diamètres de cœur très supérieurs à la longueur d'onde, typiquement supérieurs à 30 fois la longueur d'onde. La gaine optique, quant à elle, doit préférentiellement présenter une très grande ouverture numérique, grâce, par exemple, à une mise à l'air libre ou grâce à un enrobage dans un matériau de très faible indice comme on le verra ultérieurement avec la gaine de confinement. De façon préférentielle, ce matériau à très faible indice est de l'air ou une structure comprenant une proportion très importante d'air. L'ensemble est pompé longitudinalement (dans l'axe principal de la fibre) par une ou plusieurs diodes électroluminescentes, en particulier diodes laser, afin d'obtenir une inversion de population correspondant à un état excité des éléments du cœur actif de la fibre composite.

On verra ultérieurement en détaillant une structure préférée de fibre composite que la gaine optique correspond en pratique à une gaine guide de pompe et que cette dernière est entourée d'une gaine de confinement et que l'onde de pompe se réfléchie à l'intérieur de la fibre à l'interface entre la gaine guide de pompe et la gaine de confinement.

On peut calculer la longueur L_{eff} nécessaire pour absorber pratiquement l'ensemble de l'énergie de la pompe par la formule suivante: L_{eff}=1 / α(d_{g}/d_{c})² où α est le coefficient d'absorption linéaire du matériau composant le cœur de la fibre, d_{g} est le diamètre de la gaine dans laquelle se propage l'onde de pompe et d_{c} le diamètre du cœur de la fibre dans lequel le signal à amplifier/laser se propage.

Le faible rapport r2/r1 utilisé dans la fibre composite permet d'absorber pratiquement l'ensemble de l'énergie de la pompe sur une distance très faible (x0, 1) comparée à une fibre optique classique mais néanmoins beaucoup plus longue (x1000) que l'épaisseur classique des cristaux laser barreaux. La grande longueur de la fibre composite du laser de l'invention comparée à celle des matériaux massifs permet de diminuer fortement les effets thermiques alors que la courte longueur de la fibre composite du laser de l'invention par rapport aux fibres classiques (rapport d_{g}/d_{c} de l'ordre de 30 à 100 ce qui implique des fibres de plus de 10m) permet de diminuer les effets non-linéaires.

A titre d'exemple de réalisation et comme représenté sur la Figure 3, le cœur 2 de la fibre composite est un barreau de silice d'environ 40 microns de diamètre dopé par des ions Ytterbium. Ce cœur 2 est inclus dans une gaine guide de pompe 4 d'environ 120 microns de diamètre en silice pure et qui comporte un certain nombre de tubes creux de petit diamètre (points noirs régulièrement disposés sur la Figure 3) formant un cristal photonique et qui garantit que seul le mode fondamental laser peut se propager dans le cœur. La gaine guide de pompe 4 est entourée d'une gaine de confinement 5 de type couronne de capillaires (tube à paroi mince rempli d'air) à faible épaisseur de paroi par rapport à leur diamètre, ce qui garanti un confinement très important de l'onde de pompe car l'indice optique de cette couronne est très faible par rapport à celui de la gaine guide de pompe et est proche de 1. L'ouverture numérique d'une telle structure est supérieure à 0,6. L'ensemble de cette structure peut être enrobé par une gaine mécanique 6 en verre de grand diamètre (1 à 10 mm) afin de lui donner une meilleure stabilité mécanique et thermique comme cela est représenté dans l'exemple de la Figure 3.

L'indice optique du cœur est plus élevé que l'indice moyen de la gaine guide de pompe et l'indice optique moyen de la gaine de confinement est inférieur à l'indice moyen de la gaine guide de pompe. Dans l'exemple de réalisation l'indice moyen de la gaine guide de pompe est d'environ 1,5 et de la gaine de confinement voisin de 1.

Dans un mode de réalisation particulier, la gaine guide de pompe 4 comprend des éléments qui sont transparent à la longueur d'onde de pompe mais absorbant à celle du rayonnement laser et qui correspond donc sensiblement à la bande de gain du cœur 2. Le terme absorbant couvre aussi bien l'absorption proprement dite que notamment la diffusion ou la diffraction. Cette disposition permet d'éviter l'amplification de la partie de l'onde laser qui n'aurait pas été injectée correctement dans le cœur et qui pourrait néanmoins venir dépeupler la population excitée dans le cœur. L'absorption peut provenir de l'utilisation d'éléments absorbants (ions par exemple) inclus dans le guide de pompe à la fabrication de la structure ou par des méthodes géométriques en inscrivant des réseaux de longue période dans le guide de pompe pour coupler vers l'extérieur les longueurs d'onde laser qui ne sont pas orientées correctement le long de l'axe principal de la fibre.

Une telle structure de fibre composite peut être utilisée pour produire des rayonnements continus ou puisés. Elle peut être utilisée dans un résonateur laser ou comme amplificateur optique.

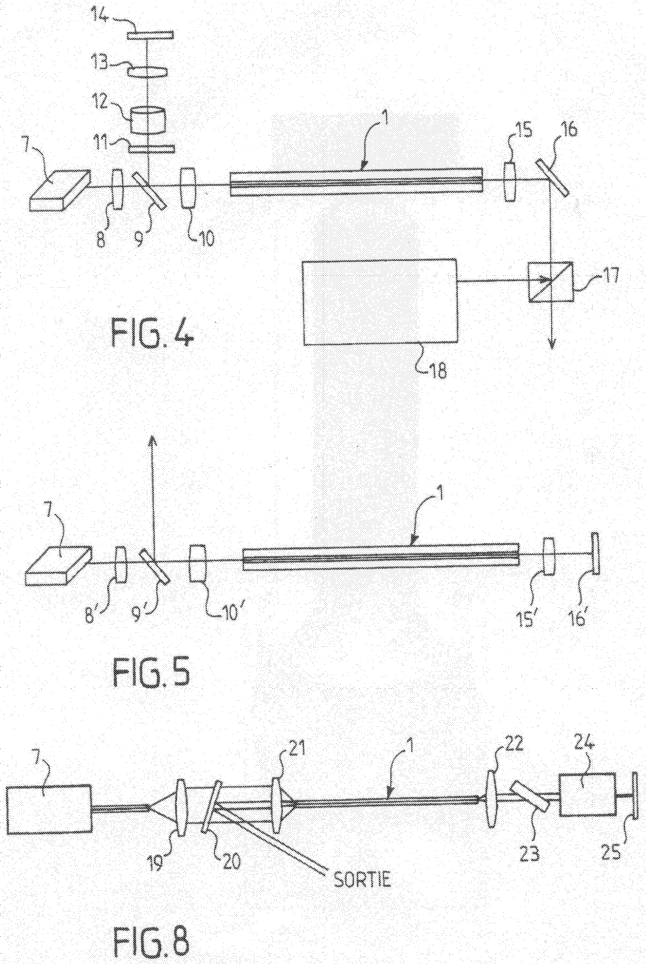

Un exemple d'utilisation d'une fibre composite à titre d'amplificateur d'impulsions est donné en relation avec la Figure 4. De la gauche vers la droite on trouve un dispositif de pompage optique 7 à type de diode laser dont le faisceau est envoyé sur une première lentille 8 et traverse une lame dichroïque 9 puis une seconde lentille 10 avant d'entrer axialement dans la fibre composite 1. Le faisceau laser produit peut ressortir de la fibre par ses deux extrémités. Par l'extrémité de pompage le faisceau laser est renvoyé par la lame dichroïque 9 vers un chemin optique comportant une lame demi-onde 11 pour filtrage, un rotateur de Faraday 12 pour réglage de polarisation, une troisième lentille 13 et un miroir 14 pour renvoi du faisceau laser vers la fibre composite 1 à travers les éléments optiques précédents. A l'autre extrémité de la fibre composite le faisceau laser est envoyé sur une quatrième lentille 15 puis un éventuel miroir de renvoi 16 vers un polariseur 17 qui peut également recevoir des impulsions optiques d'une source qui est ici une source d'impulsions laser 18. Les impulsions lasers de la source 18 sont envoyées par le polariseur 17 vers la fibre composite 1 et permettent le déclenchement de l'effet laser sur une population inversée/excitée par la pompe 7 du cœur de la fibre 1. Des impulsions laser sont ainsi crées dans la fibre 1 en synchronisme avec celles de la source 18. Une telle implantation utilise la fibre en double passage et inclus un système de rotation de la polarisation. Cette implantation permet de produire une polarisation rectiligne.

De préférence, tous les matériaux mis en œuvre dans la fibre sont identiques afin d'éviter des problèmes de dilatation thermique différentielle et ce sera du verre ou de préférence de la silice pure et comportant en outre des dopants et/ou éventuels absorbants selon la position dans la fibre. Les dopants pour le cœur actif de la fibre sont essentiellement des terres rares comme l'ytterbium ou l'association ytterbium et erbium. D'autres dopants sont utilisables notamment l'aluminium et le fluor et ils seront choisis en fonction des conditions d'utilisation et notamment de la longueur d'onde de l'onde optique de pompage. Pour un pompage par diodes électroluminescentes type laser vers 976µm l'ytterbium peut être utilisé seul.

Une fibre composite à été mise en œuvre dans une application laser et son cœur actif dopé à l'ytterbium à un diamètre d'environ 35µm. La gaine guide de pompe à une structure en réseau/matrice de capillaires (apparaissant comme des trous d'air en section transversale de la fibre) de type cristal photonique et présente une forme extérieure sensiblement hexagonale dont le diamètre de coin à coin est d'environ 141 µm et plan à plan de 117µm. Le rapport diamètre de trou sur pas du réseau est d'environ 0,33. Autour de la gaine guide de pompe est disposée une gaine de confinement qui comporte essentiellement de l'air et résultant de l'accolement de capillaires. La gaine de pompe permet le confinement de l'onde laser dans le cœur de la fibre et autorise le passage de l'onde de pompe qui va se réfléchir sur la gaine de confinement pour pouvoir être renvoyée vers le cœur qu'elle pourra éventuellement exciter. Enfin une gaine mécanique d'environ 1,70mm de diamètre entoure la gaine de confinement. La longueur de la fibre est d'environ 48cm. L'ouverture numérique de cette structure est d'environ 0,6 et permet la mise en œuvre d'un pompage axial par des diodes électroluminescentes classiques d'ouverture numérique à 0,22 à 400µm, notamment diodes lasers.

Un montage laser continu a été réalisé dans lequel la fibre composite a été placée dans une cavité limitée d'un premier coté par un miroir hautement réflecteur et du second coté par un système réflecteur Fresnel à environ 4%. Ce montage laser continu est représenté à la Figure 4 avec de la gauche vers la droite, un dispositif de pompage optique 7 à type de diode laser dont le faisceau est envoyé sur une première lentille 8' et traverse une lame dichroïque 9' (réflecteur Fresnel) puis une seconde lentille 10' avant d'entrer axialement dans la fibre composite 1. Le faisceau laser produit peut ressortir de la fibre par ses deux extrémités. Par l'extrémité de pompage le faisceau laser est renvoyé par la lame dichroïque 9' pour sortie laser. A l'autre extrémité de la fibre composite le faisceau laser est envoyé sur une lentille 15' puis un miroir de retour 16'.

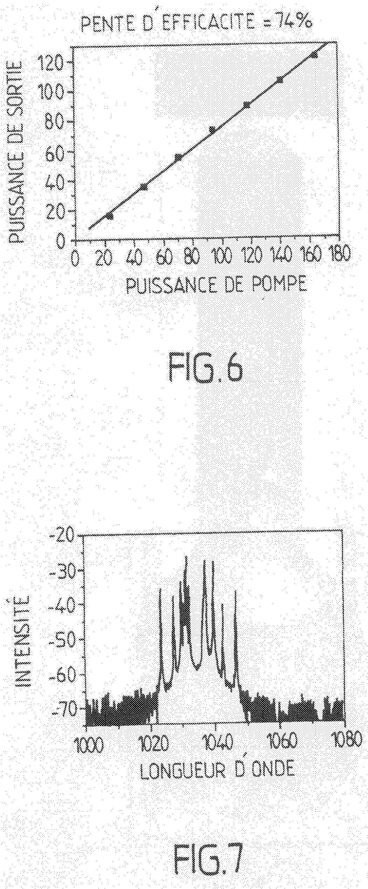

Pour ce montage laser continu, le coefficient d'absorption de l'onde de pompe a été déterminé à environ 30dB/m à 976nm de longueur d'onde. La pente d'efficacité représentée à la Figure 6 a été déterminée à 74% et le seuil d'émission laser est relativement bas à moins de 10W de pompage. Ces résultats ont été obtenus avec pompage par les deux extrémités de la fibre qui sont tranchées perpendiculairement à l'axe principal de la fibre. Avec 165W d'onde de pompage à 976nm, une onde laser de 120W à une longueur d'onde 1030nm a été obtenue et une puissance linéique de 250W/m a été déterminée. Le spectre de l'onde laser obtenue est représenté à la Figure 7. On doit noter que pour ces essais donnant une puissance linéique de 250W/m, la fibre n'était pas refroidie d'une manière forcée et était simplement à l'air. Ces résultats sont déjà supérieurs à ceux des lasers à fibre traditionnels de grande longueur et sans les limitations dues aux effets non-linéaires du fait de la très courte longueur de la fibre. De plus grandes puissances/énergies apparaissent être atteignables du fait de l'absence d'inflexion de la courbe d'efficacité dans la gamme de mesure des tests.

La gaine mécanique, de préférence en verre (silice pure), outre la rigidité mécanique et la protection mécanique pour la gaine de confinement qui est relativement fragile car formée d'un assemblage contigu de capillaires de relativement grand diamètre et faible épaisseur de parois, permet également la dissipation de la chaleur produite dans la fibre. La gaine mécanique peut être laissée à l'air ou autre gaz (éventuellement ventilation forcée) ou être disposée dans un liquide de refroidissement. Dans le cas où la surface extérieure de la gaine mécanique peut être conformée autrement que circulaire, on envisage une forme extérieure dont une partie de la surface est plane, par exemple fibre avec gaine mécanique de section triangulaire ou carrée, cette partie plane pouvant être disposée sur une surface métallique de refroidissement du type radiateur avec interposition éventuelle d'une pâte conductrice de la chaleur (les indices de dilatation pouvant être différents entre la gaine mécanique et le radiateur, il est préférable d'éviter un collage direct de la fibre sur le radiateur).

Le matériau de la gaine mécanique peut être différent du verre (silice pure) mais on tiendra compte de réchauffement attendu pour son choix, outre la limitation des effets de dilatation thermique différentielle on choisira un matériau restant solide à la température attendue ce qui pourra limiter le choix dans le cas de matières thermoplastiques du type polymères organiques. Dans une variante, une couche externe de protection du type manchon thermorétractable, peut être mise en œuvre autour de la gaine mécanique.

La fibre optique composite peut être mise en œuvre dans un laser déclenché produisant des impulsions de durée inférieure à 10ns du fait de la faible longueur de la fibre. Un tel montage expérimental de laser à environ 1030nm de longueur d'onde est proposé sur la Figure 8 où l'on trouve du haut vers le bas, un système de pompage 7 à diode(s) électroluminescente(s) à 976nm de longueur d'onde, une première lentille 19, un miroir dichroïque 20 ayant une courbe de réponse telle qu'il réfléchit les longueurs d'ondes supérieures à 1010nm et transmet les longueurs d'ondes inférieures à 990nm, une seconde lentille 21, la fibre 1 à faces d'extrémités perpendiculaires à l'axe principal de la fibre, une troisième lentille 22, un polariseur film mince 23, une cellule de déclenchement 24 (cellule de Pockels) et un miroir réfléchissant 25 les longueurs d'ondes supérieures à 1010nm. La cellule de déclenchement a un temps de monté d'environ 10ns et le rapport temps de repos sur temps d'émission a été compris entre 1 et 50. Le signal laser impulsionnel est extrait par la lame dichroïque 20.

La fibre mesure environ 43cm de long et la cavité mesure environ 60cm de long. Pour cette fibre, le rapport diamètre de trou sur pas du réseau de la gaine guide de pompe est d'environ 0,33. Un gain de 25dB avec saturation en simple passage a été mesuré.

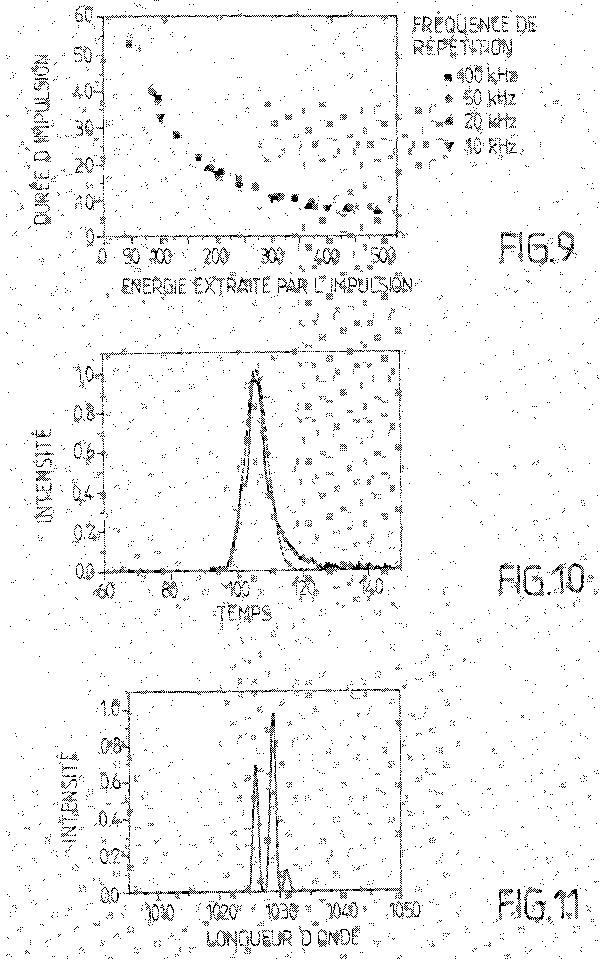

L'énergie des impulsions obtenues est donnée à la Figure 9 pour plusieurs fréquences de répétition entre 2,5 et 100kHz. La Figure 10 illustre la durée des impulsions laser dans le cas d'impulsions de moins de 10ns de durée. La plus petite durée d'impulsion laser obtenue avec ce montage expérimental a été de 7,5ns. La Figure 11 donne enfin la répartition spectrale de l'onde laser qui est aux environ de 1030nm et une largeur d'environ 4nm. Cette faible longueur d'onde est due à la forte densité de population excitée obtenue conduisant à un décalage du maximum de gain vers les plus faibles longueurs d'ondes causé par les 3 niveaux de l'ytterbium. Enfin, le degré de polarisation a été mesuré comme meilleur que 1 à 20.

Ce montage a donc permis de produire des impulsions d'environ 10ns de 500µJ et une puissance moyenne de 31 W limitée par la puissance de pompage disponible. Toutefois, il a été préférable de limiter l'énergie extraite à 500µJ à cause de possibles dommages sur les faces de sortie de la fibre qui sont ici perpendiculaires au grand axe de la fibre. La mise en œuvre de faces de sortie planes obliques et/ou le collage ou soudage d'embouts (« end caps ») sur les faces de sortie permettrait de limiter ces risques et permettrait ainsi l'extraction d'une plus grande quantité d'énergie. Les embouts sont des pastilles de verre (silice) sensiblement homogènes ou à gradient d'indice de 5 à 6 mm d'épaisseur dans lesquelles le faisceau peut s'étaler, ce qui permet de diminuer l'énergie surfacique en sortie de laser et de rester en dessous des niveaux destructifs. Les expériences faites ont montré qu'il apparaissait possible d'obtenir de meilleurs résultats du fait que les limites théoriques d'un tel laser déclenché n'étaient pas atteintes.

On peut noter que du fait que la fibre composite ne provoque pas de phénomènes de polarisation, il est possible de pomper la fibre composite par deux ondes de pompe polarisées orientées perpendiculairement l'une par rapport à l'autre à travers une même face d'extrémité de la fibre composite. Ceci pouvant être réalisé à chacune des extrémités de la fibre composite, on peut quadrupler la puissance de pompe par rapport à un pompage classique d'une seule extrémité de fibre composite.

## Revendications

1. Laser à fibre comportant une fibre optique composite (1) pour laser comportant un cœur (2) entouré d'une gaine guide de pompe au contact du cœur, la fibre comportant en outre une gaine de confinement (5) autour de la gaine guide de pompe, ladite gaine de confinement étant d'indice optique inférieur à l'indice optique du matériau de la gaine guide de pompe, la gaine guide de pompe (4) étant une structure photonique formée d'un ensemble sensiblement régulier matriciel de capillaires espacés disposés parallèlement au cœur dans un matériau de gaine guide de pompe, le cœur étant dans un matériau de cœur avec en outre des éléments dopants pouvant être mis dans au moins un état électronique excité par absorption de l'énergie d'un signal optique de pompe d'une première longueur d'onde déterminée traversant ledit cœur et pouvant la restituer par désexcitation sous forme d'un signal optique d'une seconde longueur d'onde déterminée, le cœur ayant un diamètre déterminé et la gaine guide de pompe ayant un diamètre déterminé, le diamètre de gaine guide de pompe étant supérieur au diamètre de cœur et inférieur ou égal à quatre fois le diamètre de cœur, le diamètre du cœur étant supérieur ou égal à 35 micromètres, une gaine mécanique (6) étant disposée autour de la gaine de confinement, la gaine mécanique étant configurée pour apporter une rigidité mécanique et permettre une dissipation de chaleur, la gaine de confinement comportant essentiellement de l'air et étant formée d'un assemblage contigu de capillaires accolés et le laser à fibre comportant en outre des moyens propres à la fibre et/ou extérieurs à la fibre permettant de former une cavité optiquement accordée comportant la fibre afin de produire un signal optique de seconde longueur d'onde laser, **caractérisé en ce que** la longueur de la fibre est inférieure à 50cm.

2. Laser selon la revendication 1, **caractérisé en ce que** le signal optique de pompe est injecté dans la fibre axialement dans le cœur et la gaine guide de pompe.

3. Laser selon la revendication 1 ou 2, **caractérisé en ce qu'**il est pulsé et comporte une cellule de déclenchement (24).

4. Laser selon la revendication 1 ou 2, **caractérisé en ce qu'**il est utilisé en amplificateur d'un signal optique comportant des impulsions optiques, la fibre étant traversée par le signal optique à amplifier et les impulsions déclenchant l'émission laser.

5. Laser selon l'une des revendications 1 à 4 dans lequel le matériau de cœur est identique au matériau de gaine guide de pompe et est de la silice pure.

## Patentansprüche

1. Faserlaser mit einer optischen Verbundfaser (1) für einen Laser, die einen Kern (2) aufweist, der von einer mit dem Kern in Kontakt befindlichen Pumpleiterumhüllung umgeben ist, wobei die Faser außerdem um die Pumpleiterumhüllung herum eine Begrenzungshülle (5) aufweist, wobei die Begrenzungshülle einen optischen Index aufweist, der niedriger als der optische Index des Materials der Pumpleiterumhüllung ist, wobei die Pumpleiterumhüllung (4) eine photonische Struktur ist, die aus einer im Wesentlichen regelmäßigen matrixartigen Gesamtheit von beabstandeten Kapillaren gebildet ist, die parallel zum Kern in einem Pumpleiterumhüllungsmaterial angeordnet sind, wobei der Kern aus einem Kernmaterial mit zusätzlichen Dotierungselementen besteht, die durch Absorption von Energie eines den Kern durchlaufenden optischen Pumpsignals einer bestimmten ersten Wellenlänge in wenigstens einen angeregten elektronischen Zustand versetzt werden können und die diese durch Entregung in Form eines optischen Signals einer bestimmten zweiten Wellenlänge wieder abgeben können, wobei der Kern einen bestimmten Durchmesser aufweist und die Pumpleiterumhüllung einen bestimmten Durchmesser aufweist, wobei der Durchmesser der Pumpleiterumhüllung größer als der Durchmesser des Kerns und kleiner als oder gleich dem Vierfachen des Durchmessers des Kerns ist, wobei der Durchmesser des Kerns größer als oder gleich 35 Mikrometer ist, wobei eine mechanische Umhüllung (6) um die Begrenzungshülle gelegt ist, wobei die mechanische Umhüllung dazu ausgelegt ist, eine mechanische Steifigkeit zu verleihen und eine Wärmeabgabe zu ermöglichen, wobei die Begrenzungshülle im Wesentlichen Luft aufweist und aus einer zusammenhängenden Zusammenfügung aneinander liegender Kapillare gebildet ist und der Faserlaser der Faser eigene und/oder bezüglich der Faser außenstehende Mittel aufweist, die ermöglichen, einen optisch abgestimmten Hohlraum zu bilden, der die Faser enthält, um ein optisches Signal einer zweiten Laserwellenlänge zu erzeugen, **dadurch gekennzeichnet, daß** die Länge der Faser weniger als 50 cm beträgt.

2. Laser gemäß Anspruch 1, **dadurch gekennzeichnet, daß** das optische Pumpsignal axial in den Kern und die Pumpleiterumhüllung in die Faser eingestrahlt wird.

3. Laser gemäß Anspruch 1 oder 2, **dadurch gekennzeichnet, daß** er gepulst ist und eine Triggerzelle (24) aufweist.

4. Laser gemäß Anspruch 1 oder 2, **dadurch gekennzeichnet, daß** er zur Verstärkung eines optischen Signals verwendet wird, das optische Impulse aufweist, wobei die Faser vom zu verstärkenden optischen Signal durchlaufen wird und die Impulse die Laserausstrahlung auslösen.

5. Laser gemäß einem der Ansprüche 1 bis 4, wobei das Material des Kerns mit dem Material der Pumpleiterumhüllung identisch ist und reines Siliziumoxid ist.

## Claims

1. A fibre laser including a composite optic fibre (1) for laser comprising a core (2) surrounded with a pump guiding sheath in contact with the core, the fiber including moreover a confinement sheath (5) around the pump guiding sheath, said confinement sheath having an optical index smaller than the optical index of the material forming the pump guiding sheath, the pump guiding sheath (4) being a photonic structure formed by a substantially regular matrix assembly of spaced capillaries arranged parallel to the core in a pump guiding sheath material, the core being in a core material with moreover doping elements which may be brought into at least one excited electronic state by absorbing the energy from a pump optical signal of a first determined wavelength running through said core and capable of giving-back the former by de-energization in the form of an optical signal of a second determined wavelength, the core having a determined diameter and the pump guiding sheath having a determined diameter, the diameter of pump guiding sheath being greater than the core diameter and smaller than or equal to four times the core diameter, the core diameter being greater than or equal to 35 micrometers, a mechanical sheath (6) being arranged around the confinement sheath, the mechanical sheath being configured to bring mechanical rigidification and enabling heat dissipation, the confinement sheath including mainly air and being formed by an adjoining assembly of attached capillaries, and the fibre laser including moreover means individual to the fibre and/or external to the fibre enabling to form an optically tuned cavity containing the fibre in order to produce a laser optical signal of second wavelength, **characterised in that** the length of the fibre is smaller than 50 cm or less.

2. A laser according to claim 1, **characterised in that** the pump optical signal is injected into the fibre axially in the core and the pump guiding sheath.

3. A laser according to claim 1 or 2, **characterised in that** it is pulsed and includes a trigger cell (24).

4. A laser according to claim 1 or 2, **characterised in that** it is used as an amplifier for an optical signal containing optic pulses, the fibre being run through by the optical signal to be amplified and the pulses triggering the laser emission.

5. A laser according to any one of claims 1 to 4, wherein the core material is identical to the material forming the pump guiding sheath and is pure silica.
